# EUROPEAN PATENT APPLICATION

(11) **EP 3 705 627 A1**
(43) Date of publication of application: **09.09.2020**
(21) Application number: 20161521.8
(22) Date of filing: 06.03.2020
(51) Int. Cl.: E01C 23/01, G08G 1/01

(54) **POTHOLE MONITORING**

(30) Priority: 08.03.2019 GB 201903156
(71) Applicant: Trakm8 Ltd, Shaftesbury, Dorset SP7 9QJ (GB)
(72) Inventor: COWLEY, Matthew William, Wincombe Business Park SP7 9QJ (GB); HENDERSON, Matthew, Wincombe Business Park SP7 9QJ (GB)
(74) Representative: Script IP Limited

(57) **Abstract**

A method, computer program and apparatus for forecasting pothole occurrence in a road is disclosed. The method comprises: receiving data from at least one telematics device mounted on a vehicle, the data comprising data output by at least one accelerometer mounted on the vehicle and data indicative of a location of the vehicle during the accelerometer data measurement; applying said data processed to be indicative of a roughness of said road to a model generated from stored roughness data derived from similarly processed accelerometer data sampled from roads with a known pothole occurrence, said model relating said roughness data to pothole occurrence; and determining an expected rate of pothole occurrence from the comparison; and outputting a pothole forecast for the road.

## Description

### FIELD OF THE INVENTION

The invention relates to pothole forecasting.

### BACKGROUND

Potholes are a problem in our roads. According to the AA (automobile association UK) repairs to vehicles due to potholes cost UK motorists approximately £684m a year. However, the cost of repairing potholes is also high and the total budget for this maintenance is under pressure.

Potholes are caused by the expansion and contraction of ground water after the water has entered into the ground under the asphalt. As water freezes, it expands and the asphalt will expand, bend, and crack, which weakens the road. When ice melts, the pavement (road surface) contracts and leaves gaps or voids in the surface under the pavement, where water can get in and be trapped. If the water freezes and thaws over and over, the road will weaken and continue cracking. As the weight of cars and trucks pass over the weak spot in the road, pieces of the roadway material weaken, which will cause the material to be displaced or broken down from the weight, creating a pothole.

In order to be able to manage road repair budgets and to direct them to the most appropriate places, a knowledge of pothole locations and in particular, of which roads have the highest number of potholes would be helpful. A knowledge of pothole locations could be used not only in effectively targeting road repairs but also in routing vehicles to avoid the most damaged roads where appropriate

It would be desirable to be able to provide a pothole forecast for different stretches of road.

### SUMMARY

A first aspect provides a method of forecasting pothole occurrence in a road said method comprising: receiving data from at least one telematics device mounted on a vehicle, said data comprising data output by at least one accelerometer mounted on said vehicle and data indicative of a location of said vehicle during said accelerometer data measurement; applying said data processed to be indicative of a roughness of said road to a model generated from stored roughness data derived from similarly processed accelerometer data sampled from roads with a known pothole occurrence, said model relating said roughness data to pothole occurrence; and deriving a pothole forecast for said road from said model.

A pothole is a depression in the road surface, where traffic has removed broken pieces of the pavement. This creates a rough road, increased vibration, noise and potentially damage to vehicles. Drivers typically try to avoid pothole by steering a smooth path.

Potholes form following the fatigue of the road surface. A characteristic of fatigue on the road is small cracks and a modest increase in the road surface roughness. These small cracks occur over a wide surface area as the general road surface deteriorates. These cracks eventually increase in size and develop into potholes when the broken pieces of pavement are ejected from the road by passing vehicles.

Detection of the quality of the road surface through detection of minor cracking and surface quality is possible using accelerometers combined from many vehicles. Using an algorithm (machine learnt from historical data) it's possible to calculate the time in future when a pothole is likely to develop. It is also possible to estimate from the detected roughness the number of potholes that are currently present even when they have been avoided by driver's steering a path around them.

The advantage of this method is :
- The road surface cracking occurs across the road and is often not visible to the driver, so the driver is unable to avoid the poorer road surface. Therefore recording accelerometer data is not affected by driver steering a smooth path.
- The road surface cracking can cover large areas of the road segment, often over hundreds of meters, so the vehicle is unable to avoid this surface. Therefore recording accelerometer data is not affected by driver steering a smooth path.
- Detection of a pothole before it is visible allows preventative measures and planning to begin earlier which leads to faster and cheaper repair as well as a smoother overall driving experience (if the roads are repaired before potholes occur).

The present invention provides a method of indirectly measuring potholes, or at least the likelihood of a pothole occurring within a given road. The inventors recognised that telematics devices which are mounted on an increasing number of vehicles often have accelerometers associated with them. Data from accelerometers provide an indication of the roughness of the road and research within Trakm8 Limited has indicated that there is a relationship between the general road surface smoothness and the probability of potholes. A vehicle travelling over a rough surface generates vibration and audible noise within the vehicle. It is possible to measure this vibration at least some of which may indicate early stage road cracking from within a moving vehicle by measuring the vibration using a low cost accelerometer fitted to a vehicle.

There is data available indicating the location of some potholes. This data may have been generated in response to reporting by individuals, or by surveys. Accelerometers on vehicles travelling along roads allow data regarding the vibration and audible noise within the vehicle to be collected. The inventors recognised that with appropriate processing of the data collected from the accelerometers an indication of the roughness of the road could be derived and this could be stored along with the pothole frequency for that road. This would allow accelerometer data collected from roads with unknown pothole frequency to be processed in a similar way to generate a similar indication of road roughness and this processed data could in effect be compared with the stored data to derive an estimate of an expected rate of pothole occurrence, in other words a pothole forecast.

In order to do this a model is created from the stored processed data and associated pothole occurrence which links roughness data to pothole occurrence. Applying data received from accelerometers to the model allows this data to be used to derive a pothole forecast.

In some embodiments, said pothole forecast comprises at least one of a current expected pothole rate and a future expected pothole rate.

The pothole forecast derived from the model may be a current rate or it may be an expected future rate. In this regard, the characteristics of road roughness may not only indicate how likely there are currently to be potholes but it may also indicate how likely it is for potholes to form.

In some embodiments, said method comprises processing said data to generate said data indicative of a roughness of said road.

The data received from the accelerometer may be processed on the telematics device to isolate components of the accelerometer data that are illustrative of the roughness of the road and to generate therefrom processed data indicative of the roughness of the road and it may be this data that is received and applied to the model in the method. This has the advantage of reducing the amount of data that is transmitted. Alternatively the data may be transmitted simply as accelerometer data and processed by the method at the central analysing location. This has the advantage of not needing to adapt the telematics device and being able to use conventional telematics devices which are found on an increasing number of vehicles, it also has the advantage of the central location not having the same volume and power constraints and therefore being able to provide more processing power. In some embodiments, a combination of the two occurs whereby some processing occurs on the vehicle and some at the central device. Provided that the data that is used in the comparison is processed in the same or a similar way as the historic data in the data store then an accurate pothole forecast should be possible.

The data from the accelerometers is characteristic of the roughness of the road and is processed to highlight this component of the data either centrally or on the vehicle or as a combination of the two. The data is collected from vehicles that are travelling and it may be processed such that the road is analysed in sections of predetermined distances and the characteristic of the roughness of the road for each section is determined separately.

In some embodiments, said processing step comprises determining a size and frequency of vertical acceleration measured by said accelerometer.

One way in which the accelerometer data can be processed to accentuate the components of that data that are due to road roughness can be to determine a size and frequency of vertical acceleration measured by the accelerometer. In this regard, an accelerometer will generally measure acceleration in each of the three different orthogonal directions. Isolating the vertical component can be done by analysis of the data to determine the horizontal and sideways components and isolating the vertical components from these.

In some embodiments, said processing step comprises combining said vertical acceleration data measured for a section of road and dividing said combined data by a length of said section.

The vertical acceleration data over a unit length of road has been found to be a characteristic factor of road roughness and may be used in the pothole forecast. The combining of the data may be done in a number of ways, but in some embodiments it comprises integrating the measured vertical acceleration over a particular distance and dividing the number by the distance to provide a combined vertical acceleration per unit distance.

In some embodiments, said processing step comprises filtering said data.

An additional and/or alternative processing step may comprise filtering the data. In this regard, some of the data may be particularly relevant to the roughness of the road and other data may be caused by other factors which may be able to be isolated and removed from that data.

In some embodiments, said filtering comprises removing characteristic periodic or background accelerations indicative of at least one of a road surface type and traffic calming road surface features from said data prior to performing said comparing step.

In particular, filtering may remove characteristic periodic or background accelerations which may be due to a concrete road surface for example, or to traffic calming measures such as rumble strips or speed bumps.

In some embodiments, said step of receiving further comprises receiving a speed of said vehicle.

The speed of the vehicle is another factor that affects the pothole forecast and may be another data input to the model.

In some embodiments, data inputs to said model comprise combined vertical acceleration data per unit length of road and a speed of said vehicle and data outputs comprise said expected rate of pothole occurrence for a unit length of said road.

In some cases the model links combined vertical acceleration data per unit length and speed of vehicle to pothole occurrence, using an algorithm having coefficients derived using linear regression analysis on road roughness data derived from similarly processed accelerometer data collected from roads with known pothole occurrence.

In some embodiments, said method further comprises receiving data indicative of known pothole occurrences for at least a section of said road and updating said model in response to said received data.

The model can be continually updated as new data regarding pothole occurrence is received. This data can be correlated with recent accelerometer data for these roads to verify the model and where appropriate update it.

In some embodiments, said model comprises an algorithm comprising coefficients for weighting input data and the update of the model comprises updating said coefficients that are used in the algorithm.

The updating of the model may involve updating the coefficients used to link the input with the output data.

Although, the accelerometer data may be collected from a single vehicle, in some embodiments, said method comprises receiving data from a plurality of telematics devices mounted on a plurality of vehicles travelling over a same section of road and said processing step comprises combining said received data.

As noted in the introduction vehicles are increasingly often carrying telematics devices and these may have accelerometers associated with them. There are therefore potentially many sources of accelerometer data for the same section of road and these can be collected and combined to improve the quality of the data used. In this regard, the combining may simply be averaging or some sort of weighted averaging, the weighting depending on the perceived quality of the data and/or the time of measurement, older data being given a lower weighting.

In some embodiments, said data from said accelerometer is sampled at a sampling rate of between 1 Hz and 100Hz and preferably between 50 and 100 HZ.

In order for the data from the accelerometer to be characteristic of the roughness of the road it needs to be sampled at a certain rate. In this regard, it has been found that sampling between 1 and 100 HZ may provide good characteristic data and preferably sampling at a sample rate of more than 50 HZ, and more preferably more than 80Hz. The sampling of the data may occur at the central processing unit prior to processing the data, alternatively it may occur in the telematics prior to it being output.

In some embodiments, said steps of said method are performed for a plurality of sections of said road, and an expected rate of pothole occurrence is determined and output as said pothole forecast for each of said sections said road.

The road may be divided into sections and each section may be analysed in turn and the expected rate of pothole occurrence can be determined and output for each section as a pothole forecast for the road.

In some embodiments, said method is performed over a plurality of roads and said step of outputting comprises outputting a map of said plurality of roads, said map comprising a pothole forecast for each of said plurality of roads on said map.

The pothole forecast may be output in a number of ways, but in some embodiments it is output as a map of the roads surveyed. In this regard, a map can be configured such that sections of road with a particularly high likelihood of potholes are highlighted in some way, so that information regarding particularly rough roads is provided in an easily accessible way to either road repairers or route planners who can act accordingly.

In some embodiments, said step of outputting comprises outputting said pothole forecast data to a route planner, such that said route planner can plan a route in dependence upon said pothole forecast.

The pothole forecast data may in some embodiments be output to a route planner which may use it to plan routes which avoid sections of road with a high probability of potholes where there are alternatives smoother roads that can be selected.

In some embodiments, said step of receiving said data is performed over a period of time and said data is received from a plurality of vehicles, and said step of processing comprises generating data indicative of a rate of change in roughness of said road; said method further comprising: determining an expected rate of future pothole occurrence from said rate of change in roughness; and outputting a current and future pothole forecast for said road.

As data may be collected from a number of vehicles, data from different periods of time may also be collected and stored and thus, in addition to determining a characteristic roughness of a road, a rate of change in that roughness may also be determined. This may be used to determine an expected rate of future pothole occurrence such that a current and future pothole forecast can be made. This may be particularly useful where the data is to be used to target road repairs in an area. It may be significantly cheaper and more effective to repair a road before potholes appear.

Consider lots of vehicles running over the same road each transmitting data that is indicative of the roughness of the road. By collecting data from these vehicles over time, a determination not only of the current roughness of the road can be made, but also of how quickly it is deteriorating and thus of a future roughness or pothole forecast. In this regard the roughness of the road will change depending on a wide range of factors such as traffic and weather. Since embodiments can measure the effect of these factors on the rate of change, regression techniques can be used as part of the forecast. These can identify roads that are deteriorating quicker than others and indeed those that are not deteriorating so quickly. This information could be used to forecast future pothole events, to target road repairs and indeed to select certain road surfaces for certain traffic conditions.

In some embodiments, said data indicative of known pothole occurrences comprises at least one of data from a camera mounted on a vehicle and monitoring said road surface and received pothole survey data.

The known pothole data may come from pothole survey data and/or from a camera mounted on a vehicle which monitors the road surface and has software for automatically identifying potholes which are then logged associated with their location.

Although the data may be received in a number of ways, in some embodiments the data is received via a wireless network.

Given that telematics devices are mounted on many vehicles a processing apparatus in a central location may receive data from many of these different vehicles via the use of wireless network communications which allow a telematics device to send collected data to a central point.

A second aspect of the present invention provides a method performed on a vehicle comprising: receiving at said vehicle a pothole forecast for at least some roads; and outputting an indication to a driver where said pothole forecast indicates a probability of pothole occurrence to be greater than a predetermined value.

The pothole forecast generated by the method of the first aspect may be used in a number of ways. It may be used by the council when targeting road repairs and it may be used by navigation software to optimize route selection. In some cases it may also be sent back to a vehicle such that the driver of the vehicle may receive an indication where a pothole forecast indicates the probability of pothole occurrence to be high.

In some cases this indication may come as a warning to the driver that there are likelihoods of potholes ahead in which case he may wish to slow down or select an alternative route. In other embodiments it may be output via a navigation system associated with the vehicle. In the latter case then this information can be used in route selections such that areas of road that are particularly rough can be avoided.

In some embodiments the method performed on the vehicle further comprises measuring accelerations in three dimensions experienced by said vehicle using an accelerometer; measuring a location and speed of said vehicle; and outputting data from said accelerometer and data indicative of said speed and location of said vehicle.

As well as receiving data regarding the pothole forecast a vehicle with a telematics device may transmit accelerometer data indicative of a road's roughness which can be used in the pothole forecast at the central processing location.

In some embodiments said telematics device may process said data to generate data indicative of a roughness of said road prior to outputting said data.

The telematics device may simply output accelerometer data that it has collected. In some embodiments however, it processes the data first to highlight components of the data indicative of a roughness of the road and outputs this data. This reduces the amount of data that needs to be transmitted over the wireless network.

In some embodiments, said processing step comprises determining a size and frequency of vertical acceleration measured by said accelerometer.

One way in which the accelerometer data can be processed to accentuate the components of that data that are due to road roughness can be to determine a size and frequency of vertical acceleration measured by the accelerometer. In this regard, an accelerometer will generally measure acceleration in each of the three different orthogonal directions. Isolating the vertical component can be done by analysis of the data to determine the horizontal and sideways components and isolating the vertical components from these.

In some embodiments, said processing step comprises filtering said data.

An additional and/or alternative processing step may comprise filtering the data. In this regard, some of the data may be particularly relevant for roughness of the road and other data may be caused by other factors which may be able to be isolated and be removed from that data.

In some embodiments, said filtering comprises removing characteristic periodic or background accelerations indicative of at least one of a road surface type and traffic calming road surface features from said data prior to performing said comparing step.

In particular, filtering may remove characteristic periodic or background accelerations which may be due to a concrete road surface for example, or to traffic calming measures such as rumble strips or speed bumps.

In some embodiments, said method comprises sampling said accelerometer data at a rate of between 1 and 100HZ, preferably more than 50HZ prior to outputting said data.

In some embodiments the telematics device may simply output the accelerometer data, in other embodiments, it may sample the data at a certain rate prior to outputting it in order to reduce data output, and in still other embodiments, it may both sample and process the sampled data before outputting it.

In some embodiments said telematics device further performs a step of applying said data processed to be indicative of a roughness of said road to a model generated from stored roughness data derived from similarly processed accelerometer data sampled from roads with a known pothole occurrence, said model relating said roughness data to pothole occurrence to generate a pothole forecast.

In some embodiments, the pothole forecast may be performed on the telematics device itself and the forecast output.

Where the forecast is performed on the device then in some embodiments, the method comprises receiving model updating data to update coefficients used within said model.

As noted previously as more pothole survey data is received then the model linking roughness data to pothole occurrence can be updated. Where the model is on the telematics device, then such updates to the model, which may comprise updated coefficients used within the model, can be received at the telematics device and the telematics device can update the model accordingly.

A third aspect provides circuitry configured to forecast pothole occurrence in a road said circuitry comprising: a receiver configured to receive data from at least one telematics device mounted on a vehicle, said data comprising data output by at least one accelerometer mounted on said vehicle and location data indicative of a location of said vehicle during said data measurement; modelling circuitry configured to apply said data processed to generate data indicative of a roughness of said road to a model generated from stored roughness data derived from similarly processed accelerometer data sampled from roads with a known pothole occurrence, said model relating said roughness data to pothole occurrence; and output circuitry configured to output a pothole forecast for said road derived from said modelling circuitry.

A fourth aspect provides a computer program comprising instructions which when executed by a processor are operable to cause said processor to perform a method according to a first aspect.

A fifth aspect provides a computer program comprising instructions which when executed by a processor are operable to cause said processor to perform a method according to a second aspect.

A sixth aspect provides a telematics device comprising a receiver for receiving via wireless communication a pothole forecast for at least some roads; and processing circuitry configured to determine where said pothole forecast indicates a probability of pothole occurrence to be greater than a predetermined value; and output circuitry configured to output an indication to a driver where said processing circuitry determines that said pothole forecast indicates a probability of pothole occurrence to be greater than said predetermined value.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 shows a flow diagram illustrating steps performed in a method of analysing accelerometer data to provide a pothole forecast;
Figure 2 shows a flow diagram illustrating steps performed at a vehicle receiving such a pothole forecast;
Figure 3 shows predictions of no. of potholes per km versus actual no. of potholes per km;
Figure 4 shows predicted values for every observation in the test set against their true value;
Figure 5 shows a system for generating a pothole forecast; and
Figure 6 shows a telematics device according to an embodiment.

### DESCRIPTION OF THE EMBODIMENTS

Embodiments provide a vehicle device such as a telematics device comprising an accelerometer and a positioning device such as GPS; the device continuously or continually collects accelerometer data and outputs data wirelessly to a central processing location where the data is processed to determine a pothole forecast for the road. The data that is output by the vehicle may be the accelerometer data that has been collected, or it may be a processed version of the collected data that comprises a measure of the roughness of a road surface over which the vehicle is travelling.

The data may be processed using an algorithm to link the accelerometer data to roughness. This processing may be performed on the vehicle or on a central processing server analysing data from multiple vehicles. Data output from the telematics devices is collected from multiple vehicles at a central processing device such as a server and combined to form a roughness road map.

The combined data is analysed using a model comprising an algorithm which may be trained using machine learning and creates a pothole prediction or forecast of each road segment. In this regard a model is created from survey data that provides pothole occurrence data and data collected from accelerometers is processed to indicate road roughness. A model is created where the processed accelerometer road roughness data is used as an input and coefficients are derived that generate a data output that forecasts the measured pothole occurrence. In some embodiments the model comprises the speed of the vehicle as a further input.

In some embodiments, the data used in the model is integrated vertical acceleration per unit distance along with vehicle speed. Coefficients being derived to link this data to expected pothole occurrence. The model can be continually updated as new survey data is received.

The model provides a prediction of a probability of potholes on a specific road segment. Like a weather forecast which provides the probability of rain, the pothole forecast can provide the probability of potholes and warn drivers to take additional care on specific sections of road. This data can be collected parasitically from telematics devices used by fleets and insurance black boxes.

Millions of vehicles are already fitted with Telematics devices for fleet management and insurance purposes. Many of these devices could easily collect road surface quality data with zero net additional cost.

In some embodiments, the forecast is transmitted back into the vehicles and published in a wide range of ways. For example Satnav's in vehicles may optimise their routes to provide smoother driving. Fleets may use the data to help optimise deliveries. Travel time calculations can use this data to adjust journey time estimated based on pothole and rough road forecasts.

Local authorities and national governments can use this data to target pothole surveys and repairs as well as publishing general road quality asset status information in the form of heat maps. It can be used to form national league tables and to compare road quality with other areas and event between nations.

The data can be used for early detection of deteriorating roads and therefore early prevention. Identification of cracking roads can be used to trigger preventative maintenance treatments such as application of specialist fillers and coatings.

In some embodiments, the algorithm may also detect potholes directly using the accelerometer and determine the location using GPS, this information can be input back into the pothole database and used to improve the model.

Embodiments provide a method and apparatus for indirectly detecting the probability of potholes from data collected using an accelerometer located on a vehicle, and from the accelerometer data indirectly measuring and forecasting the probability of a pothole using the general road surface, or smoothness as a proxy for pothole likelihood.

It has been found that there is a direct correlation between the average smoothness of a road surface as measured over distance and the probability of a pothole developing in the future.

There is also a direct correlation between the average smoothness of a road surface as measured over distance and the frequency of potholes.

The change in roughness over time as measured by repeated vehicle use can be used to estimate the rate of change of deterioration of a road surface over time. This can be used to create a forecast for the lifetime of the road. When combined with the vehicle frequency data, traffic density information from telematics vehicles can be used to estimate the road usage load and combined with roughness used to calculate road End Of Life (EOL) which can be used in long term road planning.

Road surface repairs can be monitored over time and the effectiveness of a repair and the effectiveness of the materials used in the repair can be assessed.

Embodiments create a pothole forecast from big data and transmit this forecast back into the vehicle to provide driver warning alerts.

Automatic detection of the type of road surface from the vibration signature may be used. Certain road surfaces are much noisier than others. Concrete roads have regular joints which generates significant road noise and vibration within the vehicle. Road surfaces often have special surface treatments such as skid resistance treatments, or rumble strips designed specifically to generate noise for reducing excessive speed. The processing circuitry or algorithm may be trained to detect these road surfaces and remove this noise from the signal using digital filtering. The resulting signal provides information regarding the underlying smoothness of the road.

In addition to potholes, road surfaces deteriorate for a range of other reasons. Rutting is caused by high temperatures which melt the road creating very long groves parallel with the road. A vehicle traveling over a rutted road surface will generate detectable accelerometer signatures.

Undulating or subsiding road surfaces generate a unique kind of accelerometer signature - akin to a fairground ride with ups and downs. This is a low frequency noise which can be detected and measured with an accelerometer.

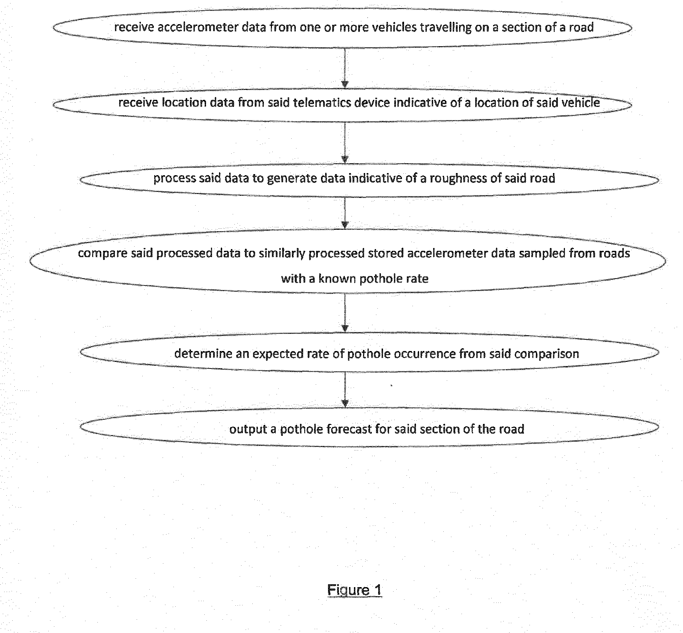

Figure 1 shows a flow diagram illustrating steps in a method performed at a central server. In an initial step data is received from an accelerometer mounted on one or more vehicles travelling along a particular road section that is indicated by location data also received from the telematics device. In some embodiments speed data is also received. This data is processed to generate data that is indicative of the roughness of the road.

This processing involves highlighting the components of the data that are relevant to road roughness, so it may involve isolating the vertical components of the accelerometer data and analysing the size and frequency of these, and it may also involve performing digital filtering to remove noise from the signal that may be due to the type of road surface and/or road calming measures on the road.

The processed data is then applied to a model that has been generated from a comparison of similarly processed stored accelerometer data that has been measured from roads with a known pothole rate and the actual pothole occurrence. From this comparison a model can be generated that links road roughness data to an expected rate of pothole occurrence. Thus, applying the data to the model enables the model to determine for the section of road that data has been received from a pothole forecast indicative of expected pothole occurrence.

In this embodiment, it is simply the current pothole occurrence that is forecast, in other embodiments, the processed accelerometer data for the section of road may be periodically stored and an indication of a rate of change of road roughness may be derived. This can be used to determine an expected future pothole occurrence, by projecting the rate of change of road roughness to a future value and comparing this with accelerometer data that has been measured from roads with a known pothole rate.

The stored accelerometer data that has been measured from roads with a known pothole rate may be periodically updated as additional information regarding potholes is received. The updated information may be used to adjust the model where it is found that the pothole forecasts are not consistent with newly measured data.

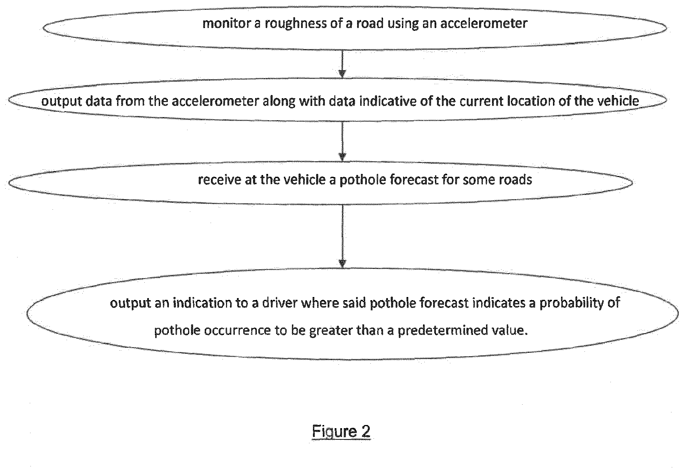

Figure 2 shows a flow diagram illustrating steps of a method performed on a telematics device mounted on a vehicle. Data is collected from an accelerometer mounted on a vehicle, this data being indicative of a roughness of a road. The data is output along with data indicative of the location of the vehicle and in some cases the speed of the vehicle. The telematics device receives a pothole forecast from a central location for some roads and outputs an indication to the driver where the probability of the pothole occurrence is greater than a predetermined value.

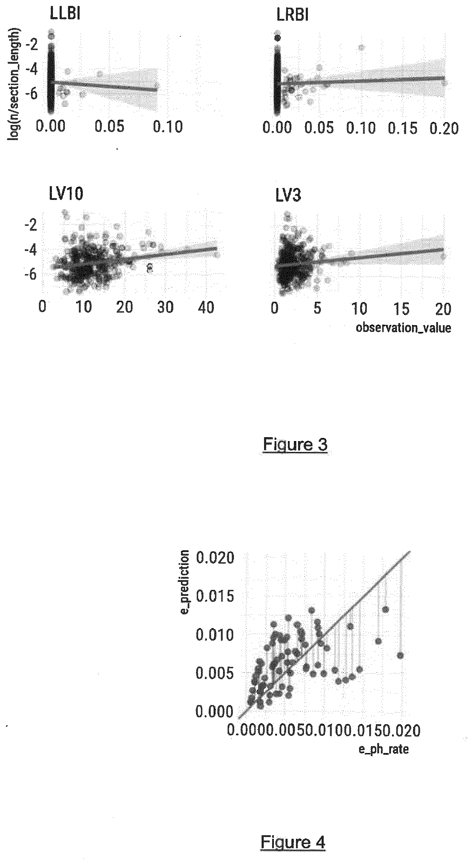

Figures 3 and 4 show the results of data analysis that indicates how the numbers of potholes per unit distance in a road network is positively related to road roughness. They also show that the number of potholes in a road section can be predicted with error rate of about .005 (potholes per km).

Using a dataset of 2984 potholes and the results of a scanner survey regression analysis was used to demonstrate that pothole rate appears to be positively correlated with road roughness. From this regression analysis a model was created and used to predict the number of potholes in a road section of known roughness and it was shown that the pothole rate can be estimated with an error of .005. The model used the integrated measured vertical acceleration divided by the distance of measuring as one data input and the speed of the vehicle as another. Coefficients to apply to the input data were derived using regression analysis on this data.

In this analysis every pothole from the pothole dataset is first assigned to the nearest section in the survey road network dataset. Distances to nearest road sections are then calculated for every pothole (this is required because for some potholes the nearest road section is not the road section where the pothole is actually located).

After assigning potholes to nearest road sections and filtering out those that are further than five metres, say, from their nearest road section we count the number of potholes in each section.

As we expect longer sections of road have more potholes simply because of their greater length we also calculate number of potholes per unit section length.

The main hypothesis we are testing is whether rougher roads have more potholes. To test this we build regression models predicting number of potholes (actually log pothole rates) from road roughness (as measured by parameters from the scanner survey). If the hypothesis is false and there is no trend for rougher roads to have more potholes then we would expect the slope of our regression model to be close to zero.

Figure 3 shows four regression models one for each of four scanner parameters (LV3, LV10, LLBI, LRBI) each point in the plot represents one section of the scanner survey. The y-axis shows log pothole rate f=log(n/l) (where n is the count of potholes and 1 is section length) and the x-axis shows roughness of the road section measured by the mean value of the scanner parameter value.

| LONGITUDINAL PROFILE | | | | | |
|---|---|---|---|---|---|
| LV3 | SCANNER or TTS 3m moving average Longitudinal Profile Variance (left/nearside) | 13 | Number/ mm² | F8.2 | 0.00 to 10000.00 |
| LLD3 | SCANNER 3m enhanced Longitudinal Profile Variance (left/nearside) | 13 | Number/ mm² | F7.2 | 0.00 to 1000.00 |
| LV10 | SCANNER or TTS 10m moving average Longitudinal Profile Variance (left/nearside) | 13 | Number/ mm² | F8.2 | 0.00 to 10000.00 |
| LL10 | SCANNER 10m enhanced Longitudinal Profile Variance (left/nearside) | 13 | Number/mm² | F8.2 | 0.00 to 10000.00 |
| LLBI | SCANNER Bump intensity (CDM) left wheel path | 13 | Nuniber/ unitless | I1 | 0 or 1 |
| LR03 | SCANNER 3m enhanced Longitudinal Profile Variance (right/offside) | 13 | Number/ mm² | F7.2 | 0.00 to 1000.00 |
| LR10 | SCANNER 10m enhanced Longitudinal Profile Variance (right/offside) | 13 | Number/ mm² | F8.2 | 0.00 to 10000,00 |
| LRBI | SCANNER Bump intensity (CDM) right wheel path | 13 | Number/ unitless | I1 | 0 or 1 |

The line in each plot is the regression line (the unique line minimising mean square error) and the shaded areas are standard errors.

None of the lines look horizontal so it would seem that there is a relationship in every case. However, there is uncertainty in the regression line due to the sparsity of data, and this is indicated by the shaded area, this being wider where there are fewer data points. If the shaded areas can accommodate a horizontal line then we can't rule out that there is no relation. Two of the plots have sufficient uncertainty that we can't rule out the unrelated case. The other two plots are different, though, and it appears in those cases that there is indeed a positive relationship.

To determine if this relationship is useful we can look at predictions of regression models on unseen data. First we split the data into test and training data. Then we train a regression model on the training subset and use the fitted model to make predictions on the unseen test set. If the relationship is useful then the predictions ought to match the unseen data quite well.

Figure 3 shows predictions of no. of potholes per km versus actual no. of potholes per km.

Figure 4 shows predicted values for every observation in the test set against their true value. Points lying on the line are exactly correctly predicted, while points further away from the line are predicted less accurately. Vertical lines (residuals) show differences between predicted and true values.

There are many values close to the line. Points with higher true value appear to be predicted less well than points with lower true value. This is probably not unexpected as we have more data from less rough roads than we have from rougher roads. Mean error is .005 which is easy to comprehend as it is exactly the size of one of the larger grid squares. Thus, it seems that road roughness and number of potholes is linked and regression analysis can be used to map the roughness data of a road surface to the expected number of potholes. Thus, a model can be created from known historical data that allows pothole prediction using accelerometer data collected from telematics devices.

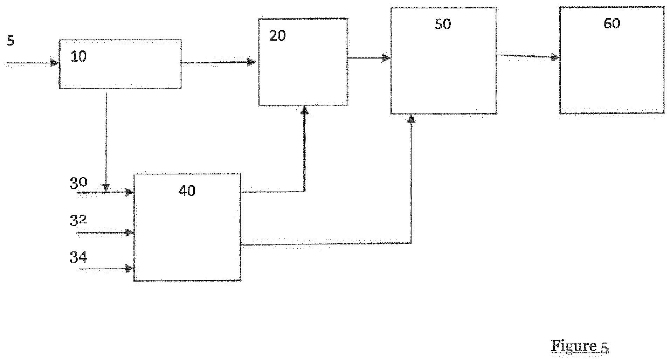

Figure 5 schematically shows a system for generating a pothole forecast. Data 5 from one or more accelerometers is transmitted from telematics devices on one or more vehicles to processing circuitry 10. Processing circuitry 10 provides an initial processing on the received data to transform 3 axis accelerometer data to accelerometer data relevant to only the vertical access. The data is then output to processing circuitry 20 which performs further processing to highlight the components of the signal due to road roughness, thus, it may comprise a digital filter configured to filter out components of the signal that may mask the roughness characteristics. These may be periodic vertical accelerometer components that are due to a road surface, for example, or to rumble strips or some other road calming measure. Although this processing step is shown as being performed in the central system, it may be performed on the telematics device and the processed data output, alternatively some of the processing steps may be performed centrally such as the filtering, while some such as the isolation of the vertical component may be performed on the telematics device.

This processed data indicative of a roughness of the road is then output to further circuitry 50 which comprises a model for linking the roughness indication with pothole occurrence.

The model in circuitry 50 is generated and updated using data stored in circuitry 40 that comprises a data store. The stored data comprises accelerometer data from vehicles travelling along roads with a known pothole occurrence processed to provide a road roughness indication, the speed of the vehicles and the pothole occurrence. A model can be created from this data that links the road roughness to the pothole occurrence. This model may be created in circuitry 40 or circuitry 50. It is applied to newly collected road roughness data in circuitry 50 to generate a pothole forecast. The pothole forecast is then output at circuitry 60.

Circuitry 40 receives data regarding actual pothole occurrence 32 and 34, this data may be received from cameras mounted on vehicles or from road users reporting pothole occurrence or from other surveys such as laser scanning of the road. Telematics accelerometer data 30 for these roads for which a pothole occurrence is known is also received at circuitry 40. This accelerometer data 30 may have had an initial processing performed on it, alternatively the data may be unprocessed and be data generated directly by the accelerometer. Circuitry 40 processes the received data in a similar way to circuitry 10 and 20 to generate an indication of a road roughness. Circuitry 40 then correlates the road roughness data with the actual pothole occurrence data and uses this correlation in the building of a model to map road roughness to pothole predictions. This model is used by circuitry 50. Circuitry 50 receives road roughness data and applies this data to the model to generate a forecast of pothole forecast.

In other embodiments rather than deriving the road roughness data in circuitry 40, the historical data is output to circuitry 10 and 20 where it is processed to generate a historical road roughness indicator for a road section which value is then sent back to circuitry 40 where it is stored with the measured historical pothole occurrence for that section of road and used in model generation and updating.

The data stored in circuitry 40 is continually updated and the updated data used to update the coefficients within the model such that the model is updated to adjust for inaccuracies.

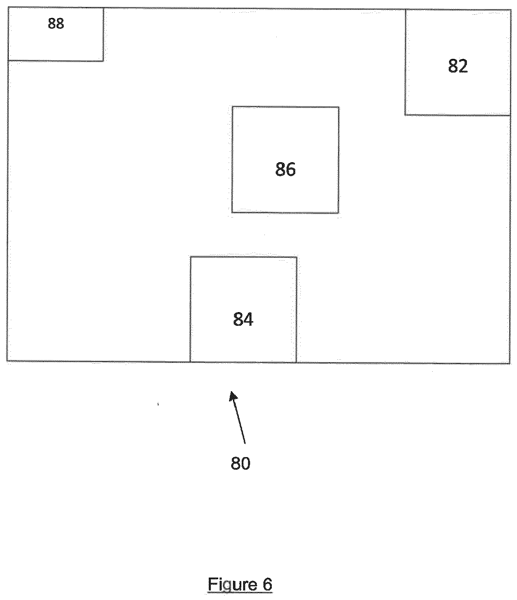

Figure 6 shows a telematics device 80 according to an embodiment. Telematics device 80 comprises an accelerometer 82 for measuring accelerations experienced by the vehicle. In some embodiments this is within the telematics device while in others it is mounted separately perhaps on the vehicle axles and signals from the accelerometer(s) are received at the telematics device. Telematics device also comprises a location sensor, in this embodiment a GPS device 84 which receives location data and a speed sensor to determine vehicle speed.

Processing circuitry 86 receives signals from both the accelerometer and the location device and speed sensor and outputs the signals via wireless antenna 88 towards a central processing server. In some embodiments, it is simply the collected data that is output, while in others the data may be processed prior to outputting the data so that data indicative of a road's roughness is output.

Signals are also received at wireless antenna 88 from a central device. This data may be data indicating pothole forecasts for roads in the vicinity. Processing circuitry may process these signals to determine if any of the signals indicate a pothole probability above a predetermined level. If such a signal is received processing circuitry 86 generates a warning signal indicating this, and the warning signal is output by the telematics device and provided to a driver.

A person of skill in the art would readily recognize that steps of various above-described methods can be performed by programmed computers. Herein, some embodiments are also intended to cover program cache servers, e.g., digital data storage media, which are machine or computer readable and encode machine-executable or computer-executable programs of instructions, wherein said instructions perform some or all of the steps of said above-described methods. The program cache servers may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### Numbered Paragraphs

1. A method of forecasting pothole occurrence in a road said method comprising:
   receiving data from at least one telematics device mounted on a vehicle, said data comprising data output by at least one accelerometer mounted on said vehicle and data indicative of a location of said vehicle during said accelerometer data measurement;
   applying said data processed to be indicative of a roughness of said road to a model generated from stored roughness data derived from similarly processed accelerometer data sampled from roads with a known pothole occurrence, said model relating said roughness data to pothole occurrence; and
   deriving a pothole forecast for said road from said model.
2. A method according to paragraph 1, wherein said method comprises processing said data to generate said data indicative of a roughness of said road,
3. A method according to paragraph 2, wherein said processing step comprises determining a size and frequency of vertical acceleration measured by said accelerometer.
4. A method according to paragraph 3, wherein said processing step comprises combining said vertical acceleration data measured for a section of road and dividing said combined data by a length of said section.
5. A method according to any one of paragraphs 2 to 4, wherein said processing step comprises filtering said data.
6. A method according to paragraph 5, wherein said filtering comprises removing characteristic periodic or background accelerations indicative of at least one of a road surface type and traffic calming road surface features from said data prior to performing said comparing step.
7. A method according to any preceding numbered paragraph, wherein said step of receiving further comprises receiving a speed of said vehicle.
8. A method according to any preceding numbered paragraph, wherein data inputs to said model comprise combined vertical acceleration data per unit length of road and a speed of said vehicle and data outputs comprise said expected rate of pothole occurrence for a unit length of said road.
9. A method according to any preceding numbered paragraph, wherein said method further comprises receiving data indicative of known pothole occurrences for at least a section of said road and updating said model in response to said received data.
10. A method according to paragraph 9, wherein said model comprises an algorithm comprising coefficients for weighting input data and the update of the model comprises updating said coefficients that are used in the algorithm.
11. A method according to any preceding numbered paragraph, wherein said method comprises receiving data from a plurality of telematics devices mounted on a plurality of vehicles travelling over a same section of road and combining said received data.
12. A method according to any preceding numbered paragraph, wherein said data from said accelerometer is sampled at a sampling rate of between 1 Hz and 100Hz and preferably between 50 and 100 HZ.
13. A method according to any preceding numbered paragraph, wherein said steps of said method are performed for a plurality of sections of said road, and an expected rate of pothole occurrence is determined and output as said pothole forecast for each of said sections said road.
14. A method according to any preceding numbered paragraph, wherein said method is performed over a plurality of roads and said step of outputting comprises outputting a map of said plurality of roads, said map comprising a pothole forecast for each of said plurality of roads on said map.
15. A method according to any preceding numbered paragraph, wherein said step of outputting comprises outputting said pothole forecast data to a route planner, such that said route planner can plan a route in dependence upon said pothole forecast.
16. A method according to any preceding numbered paragraph, wherein said step of receiving said data is performed over a period of time and said data is received from a plurality of vehicles, and said method further comprises processing said received data to generate data indicative of a rate of change in roughness of said road; said method further comprising:
   determining an expected rate of future pothole occurrence from said rate of change in roughness; and
   outputting a current and future pothole forecast for said road.
17. A method according to paragraph 9 or 16, wherein said data indicative of known pothole occurrences comprises at least one of data from a camera mounted on a vehicle and monitoring said road surface and received pothole survey data.
18. A method according to any preceding numbered paragraph, wherein said pothole forecast comprises at least one of a current expected pothole rate and a future expected pothole rate.
19. Circuitry configured to forecast pothole occurrence in a road said circuitry comprising:
   a receiver configured to receive data from at least one telematics device mounted on a vehicle, said data comprising data output by at least one accelerometer mounted on said vehicle and location data indicative of a location of said vehicle during said data measurement;
   modelling circuitry configured to apply said data processed to generate data indicative of a roughness of said road to a model generated from stored roughness data derived from similarly processed accelerometer data sampled from roads with a known pothole occurrence, said model relating said roughness data to pothole occurrence; and
   output circuitry configured to output a pothole forecast for said road derived from said modelling circuitry.
20. A method performed on a vehicle comprising:
   receiving at said vehicle a pothole forecast for at least some roads; and
   outputting an indication to a driver where said pothole forecast indicates a probability of pothole occurrence to be greater than a predetermined value.
21. A method according to paragraph 20, wherein said indication comprises a warning.
22. A method according to paragraph 20 or 21, wherein said output is output via a navigation system.
23. A method according to any one of paragraphs 20 to 22, said method further comprising measuring accelerations in three dimensions experienced by said vehicle using an accelerometer;
   measuring a location and speed of said vehicle; and
   outputting data from said accelerometer and data indicative of said location and speed of said vehicle.
24. A method according to claim 23, wherein said method further comprises processing said accelerometer data to generate data indicative of said roughness of said road prior to outputting said data.
25. A method according to claim 24, said method comprising applying said data processed to be indicative of a roughness of said road to a model generated from stored roughness data derived from similarly processed accelerometer data sampled from roads with a known pothole occurrence, said model relating said roughness data to pothole occurrence to generate a pothole forecast.
26. A method according to claim 25, comprising receiving model updating data to update coefficients used within said model.
27. A telematics device comprising a receiver for receiving via wireless communication a pothole forecast for at least some roads; and
   processing circuitry configured to determine where said pothole forecast indicates a probability of pothole occurrence to be greater than a predetermined value; and
   output circuitry configured to output an indication to a driver where said processing circuitry determines that said pothole forecast indicates a probability of pothole occurrence to be greater than said predetermined value.
28. A computer program comprising instructions which when executed by a processor are operable to cause said processor to perform a method according to any one of claims 1 to 18.
29. A computer program comprising instructions which when executed by a processor are operable to cause said processor to perform a method according to any one of claims 20 to 26.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims and their equivalents.

## Claims

1. A method of forecasting pothole occurrence in a road said method comprising:
receiving data from a plurality of telematics device mounted on a plurality of vehicles, said data comprising data output by at least one accelerometer mounted on said vehicle and data indicative of a location of said vehicle during said accelerometer data measurement;
applying said data that has been processed to be indicative of a roughness of said road to a model generated from stored roughness data derived from correspondingly processed accelerometer data sampled from roads with a known pothole occurrence, said model relating said roughness data to pothole occurrence;
wherein said step of receiving said data is performed over a period of time, and said method further comprises processing said received data to generate data indicative of a rate of change in roughness of said road; said method further comprising:
determining an expected rate of future pothole occurrence from said rate of change in roughness; and
deriving a current and future pothole forecast for said road from said model.

2. A method according to claim 1, wherein said method comprises processing said data to generate said data indicative of a roughness of said road,

3. A method according to claim 2, wherein said processing step comprises determining a size and frequency of vertical acceleration measured by said accelerometer.

4. A method according to claim 3, wherein said processing step comprises combining said vertical acceleration data measured for a section of road and dividing said combined data by a length of said section.

5. A method according to any one of claims 2 to 4, wherein said processing step comprises filtering said data.

6. A method according to claim 5, wherein said filtering comprises removing characteristic periodic or background accelerations indicative of at least one of a road surface type and traffic calming road surface features from said data prior to performing said comparing step.

7. A method according to any preceding claim, wherein said step of receiving further comprises receiving a speed of said vehicle.

8. A method according to any preceding claim, wherein data inputs to said model comprise combined vertical acceleration data per unit length of road and a speed of said vehicle and data outputs comprise said expected rate of pothole occurrence for a unit length of said road.

9. A method according to any preceding claim, wherein said method further comprises receiving data indicative of known pothole occurrences for at least a section of said road and updating said model in response to said received data.

10. A method according to claim 9, wherein said model comprises an algorithm comprising coefficients for weighting input data and the update of the model comprises updating said coefficients that are used in the algorithm.

11. A method according to any preceding claim, wherein said method comprises receiving data from a plurality of telematics devices mounted on a plurality of vehicles travelling over a same section of road and combining said received data.

12. A method according to any preceding claim, wherein said data from said accelerometer is sampled at a sampling rate of between 1 Hz and 100Hz and preferably between 50 and 100 HZ.

13. A method according to any preceding claim, wherein said steps of said method are performed for a plurality of sections of said road, and an expected rate of pothole occurrence is determined and output as said pothole forecast for each of said sections said road.

14. Circuitry configured to forecast pothole occurrence in a road said circuitry comprising:
a receiver configured to receive data from a plurality of telematics devices mounted on a plurality of vehicles, said data comprising data received over a period of time output by at least one accelerometer mounted on said vehicle and location data indicative of a location of said vehicle during said data measurement;
modelling circuitry configured to apply said data that has been processed to generate data indicative of a roughness of said road to a model generated from stored roughness data derived from correspondingly processed accelerometer data sampled from roads with a known pothole occurrence, said model relating said roughness data to current pothole occurrence and to process said data to generate data indicative of a rate of change in roughness of said road to relate said rate of change in roughness to an expected rate of future pothole occurrence; and
output circuitry configured to output a current and future pothole forecast for said road derived from said modelling circuitry.

15. A computer program comprising instructions which when executed by a processor are operable to cause said processor to perform a method according to any one of claims 1 to 13.
